# EUROPEAN PATENT APPLICATION

(11) **EP 3 223 349 A1**
(43) Date of publication of application: **27.09.2017**
(21) Application number: 15861865.2
(22) Date of filing: 20.11.2015
(51) Int. Cl.: H01M 4/62, H01G 11/00, H01G 13/00

(54) **METHOD FOR PRODUCING BINDER COMPOSITION FOR ELECTROCHEMICAL ELEMENT**

(30) Priority: 20.11.2014 JP 2014235671
(71) Applicant: Zeon Corporation, Tokyo 100-8246 (JP)
(72) Inventor: YAMAMOTO, Norikazu, Tokyo 100-8246 (JP)
(74) Representative: Maiwald Patentanwalts GmbH
(86) International application number: PCT/JP2015/005807
(87) International publication number: WO 2016/079996

(57) **Abstract**

Provided is a method for producing a binder composition for an electrochemical device that can sufficiently inhibit importation of contaminants into an electrochemical device when used in production of the electrochemical device. The method for producing a binder composition for an electrochemical device includes filling, into a container, a binder composition for an electrochemical device that contains a binder, wherein the container is a container made of a resin and shaped in a clean environment in which the number of particles of 0.5 µm in diameter is no greater than 100,000 particles per 1 ft³.

## Description

### TECHNICAL FIELD

This disclosure relates to a method for producing a binder composition for an electrochemical device, and particularly relates to a method for producing a binder composition for an electrochemical device that is filled into a container.

### BACKGROUND

Non-aqueous batteries such as lithium ion secondary batteries and capacitors such as electric double-layer capacitors and lithium ion capacitors are examples of electrochemical devices that are conventionally used in a wide variety of applications.

An electrochemical device typically includes a plurality of electrodes and one or more separators that isolate the electrodes from one another and prevent short-circuiting between the electrodes. A component for an electrochemical device having a layer formed through binding of one or more constituent components, such as an electrode active material or non-conductive particles, by a binder may be used as an electrode or separator for an electrochemical device. The component for an electrochemical device is produced using a slurry composition obtained through mixing of the constituent components, such as the electrode active material or non-conductive particles, and a binder composition containing the binder.

However, if a conductive contaminant is imported into an electrochemical device, the imported conductive contaminant may cause short-circuiting between the electrodes. Binder compositions used in production of electrodes, separators, and other components for electrochemical devices are, therefore, required to not contain conductive contaminants.

Accordingly, PTL 1, for example, proposes a technique for producing a binder composition that inhibits importation of conductive contaminants, such as magnetic metals, by filtering a polymer solution containing a vinylidene fluoride-based resin as a binder using a prefilter and a magnetic filter, and subsequently filling the polymer solution into a container made of a resin without the polymer solution coming into contact with metal.

### CITATION LIST

### Patent Literature

PTL 1: WO 2011/024708 A1

### SUMMARY

### (Technical Problem)

However, even when a component for an electrochemical device is produced using a binder composition produced by the method described in PTL 1, there are instances in which contaminants are imported into the electrochemical device and it is not possible to sufficiently inhibit the occurrence of short-circuiting between electrodes.

Accordingly, an objective of this disclosure is to provide a method for producing a binder composition for an electrochemical device that can sufficiently inhibit importation of contaminants into an electrochemical device when used in production of the electrochemical device.

### (Solution to Problem)

The inventor conducted diligent investigation with the aim of solving the problems set forth above. Through this investigation, the inventor discovered that in the conventional method of producing a binder composition described above, importation of contaminants from a container into which the binder composition is filled cannot be sufficiently inhibited, and coarse aggregate particles may be generated as contaminants during storage of the binder composition in the container. The inventor also discovered that when an electrochemical device is produced using this binder composition, not only is there a possibility of short-circuiting occurring due to conductive contaminants originating from the container, there is also a possibility of short-circuiting occurring due to the coarse aggregate particles generated during storage of the binder composition, because when the binder composition is used, for example, in production of a negative electrode, these coarse aggregate particles cause the formation of bumps on the negative electrode, leading to the occurrence of current concentration and deposition of a conductive deposit, such as dendritic metal, on the negative electrode. Through further investigation, the inventor reached a new discovery that importation of contaminants from a container and generation of coarse aggregate particles can be inhibited by using a specific container as the container into which the binder composition is filled. This discovery led to the present disclosure.

Specifically, the present disclosure aims to advantageously solve the problems set forth above by disclosing a method for producing a binder composition for an electrochemical device including filling, into a container, a binder composition for an electrochemical device that contains a binder, wherein the container is a container made of a resin and shaped in a clean environment in which the number of particles of 0.5 µm in diameter is no greater than 100,000 particles per 1 ft³ (28.3 L). By filling the binder composition for an electrochemical device into a container made of a resin and shaped in a clean environment in which the number of particles of 0.5 µm in diameter is no greater than 100,000 particles/ft³ as described above, importation of contaminants from the container and generation of coarse aggregate particles can be inhibited. Accordingly, it is possible to produce a binder composition that can sufficiently inhibit importation of contaminants into an electrochemical device when used in production of the electrochemical device.

Herein, "the number of particles of 0.5 µm in diameter per 1 ft³ (28.3 L) of space" can be determined in accordance with FED 209D by using a particle counter to calculate an average value for the number of particles of 0.5 µm in diameter in a space of 1 ft³ (cubic foot) at five random locations within a measurement target space. Note that the term "container made of a resin" is also inclusive of a container that is lined with a resin on at least an inner surface thereof.

In the presently disclosed method for producing a binder composition for an electrochemical device, the container is preferably a container made of an additive-free resin or a container lined with an additive-free resin on at least an inner surface thereof. By using a container made of an additive-free resin or a container lined with an additive-free resin on at least an inner surface thereof, elution of additives into the binder composition for an electrochemical device from the container can be inhibited, and importation of contaminants from the container and generation of coarse aggregate particles can be further inhibited.

Herein, the term "additive-free resin" refers to a resin that is produced without compounding of an additive composed of a metal or a metal salt.

In the presently disclosed method for producing a binder composition for an electrochemical device, the filling of the binder composition for an electrochemical device into the container is preferably carried out in a clean environment in which the number of particles of 0.5 µm in diameter is no greater than 100,000 particles per 1 ft³ (28.3 L). By carrying out the filling of the binder composition for an electrochemical device in a clean environment in which the number of particles of 0.5 µm in diameter is no greater than 100,000 particles/ft³, importation of contaminants from the surrounding environment during the filling can be inhibited.

The presently disclosed method for producing a binder composition for an electrochemical device preferably further includes storing the container into which the binder composition for an electrochemical device has been filled in an environment having a temperature of at least 5°C and no higher than 50°C. By storing the container into which the binder composition for an electrochemical device has been filled at a temperature of no higher than 50°C, generation of coarse aggregate particles during storage can be further inhibited. Moreover, by storing the container into which the binder composition for an electrochemical device has been filled at a temperature of at least 5°C, freezing of the binder composition for an electrochemical device can be prevented.

The presently disclosed method for producing a binder composition for an electrochemical device preferably further includes filtering the binder composition for an electrochemical device using a magnetic filter prior to the filling of the binder composition for an electrochemical device into the container. By filtering the binder composition for an electrochemical device using a magnetic filter, magnetic contaminants, such as magnetic metals, can be removed from the binder composition for an electrochemical device that is to be filled into the container.

In the presently disclosed method for producing a binder composition for an electrochemical device, the binder composition for an electrochemical device preferably has a filling rate in the container of at least 75 volume%. When the binder composition for an electrochemical device has a filling rate in the container of at least 75 volume%, generation of coarse aggregate particles during storage can be further inhibited.

### (Advantageous Effect)

According to the present disclosure, it is possible to produce a binder composition for an electrochemical device that can sufficiently inhibit importation of contaminants into an electrochemical device when used in production of the electrochemical device.

### DETAILED DESCRIPTION

The following provides a detailed description of an embodiment of the present disclosure.

The presently disclosed method for producing a binder composition for an electrochemical device can be used to produce a binder composition that is used in production of a component for an electrochemical device, such as an electrode or a separator, that is used in a non-aqueous battery, capacitor, or other electrochemical device. Moreover, the presently disclosed method for producing a binder composition for an electrochemical device can provide a binder composition that has been filled into a container and that is, therefore, in an easily storable and transportable state. Uses for the binder composition produced according to the presently disclosed method for producing a binder composition for an electrochemical device include, but are not specifically limited to, use in formation of an electrode mixed material layer of an electrode after mixing with an electrode active material and so forth, use in formation of a protective layer (porous membrane layer) of a separator or electrode after mixing with non-conductive particles and so forth, and use as-produced in formation of an adhesive layer for adhering an electrode and a separator together.

A feature of the presently disclosed method for producing a binder composition for an electrochemical device is the inclusion of a step of filling the binder composition into a container made of a resin and shaped in a specific clean environment. One example of the presently disclosed method for producing a binder composition for an electrochemical device includes, without any specific limitations, a step of preparing a binder composition that contains a binder (preparation step), a step of removing contaminants and the like from the prepared binder composition (pre-filling treatment step), a step of filling the binder composition into a container made of a resin and shaped in a specific clean environment (filling step), and a step of storing the container into which the binder composition has been filled (storage step).

The following describes, in order, each step included in this example of the presently disclosed method for producing a binder composition for an electrochemical device. However, it is not essential that that the preparation step, the pre-filling treatment step, the filling step, and the storage step described below are all carried out, and one or more of these steps may be omitted. In the presently disclosed method for producing a binder composition for an electrochemical device, a binder composition may be produced through any appropriate combination of content described below.

### <Preparation step>

In the preparation step of this example, a binder composition for an electrochemical device is prepared that contains a polymer as a binder dissolved or dispersed in a solvent. Besides the polymer and the solvent, the binder composition may contain known additives such as a viscosity modifier.

Examples of the polymer contained in the binder composition include, but are not specifically limited to, known polymers that are used as binders in production of components for electrochemical devices. Specific examples of polymers that can be used include, but are not specifically limited to, diene-based polymers such as styrene-butadiene copolymer and acrylonitrile-butadiene copolymer; fluorine-containing polymers such as polyvinylidene fluoride; and acrylic-based polymers. One of these polymers may be used individually, or two or more of these polymers may be used as a mixture.

Examples of methods by which the polymer may be produced include, but are not specifically limited to, known methods such as solution polymerization, suspension polymerization, bulk polymerization, and emulsion polymerization.

Examples of solvents that can be used include, but are not specifically limited to, water and organic solvents. Examples of organic solvents that can be used include alcohols such as methanol, ethanol, n-propanol, isopropanol, n-butanol, isobutanol, t-butanol, pentanol, hexanol, heptanol, octanol, nonanol, decanol, and amyl alcohol; ketones such as acetone, methyl ethyl ketone, and cyclohexanone; esters such as ethyl acetate and butyl acetate; ethers such as diethyl ether, dioxane, and tetrahydrofuran; amide-based polar organic solvents such as N,N-dimethylformamide and N-methylpyrrolidone (NMP); and aromatic hydrocarbons such as toluene, xylene, chlorobenzene, ortho-dichlorobenzene, and para-dichlorobenzene. One of these solvents may be used individually, or two or more of these solvents may be used as a mixture.

The combination of the polymer and the solvent can be selected as appropriate. For example, the solvent is preferably water when the polymer is an acrylic-based polymer, the solvent is preferably water or an organic solvent when the polymer is a diene-based polymer, and the solvent is preferably an organic solvent when the polymer is a fluorine-containing polymer.

### <Pre-filling treatment step>

In the pre-filling treatment step of this example, a known separation technique such as filtration is used to separate and remove contaminants and the like from the binder composition prepared in the preparation step. By carrying out the pre-filling treatment step to remove contaminants from the binder composition in advance of filling the binder composition into a container, importation of contaminants into an electrochemical device can be sufficiently inhibited when the electrochemical device is produced using the binder composition that has been filled into the container.

The method by which separation and removal of contaminants from the binder composition is carried out preferably involves microfiltration and/or filtration using a magnetic filter, and more preferably involves a combination of microfiltration and filtration using a magnetic filter. The microfiltration enables reliable removal of coarse contaminants. If a contaminant such as a metal is imported into the binder composition, short-circuiting between electrodes may occur in an electrochemical device due to the metal itself piercing through a separator or due to the metal causing current concentration on a negative electrode, leading to deposition of a conductive deposit on the negative electrode. However, the filtration using a magnetic filter enables reliable removal of magnetic contaminants, including magnetic metals such as iron, nickel, and chromium.

The microfiltration of the binder composition can be carried out using, for example, a filter having a pore size of preferably at least 5 µm and no greater than 40 µm, more preferably at least 5 µm and no greater than 20 µm, and even more preferably at least 5 µm and no greater than 15 µm. If a filter having a pore size of greater than 40 µm is used, it may not be possible to effectively remove coarse contaminants. However, use of a filter having a pore size of less than 5 µm lowers the filtration rate and reduces binder composition productivity.

In a situation in which a filter made of metal is used as the filter, it is preferable that filtration using a magnetic filter is carried out after the microfiltration to prevent metal originating from the filter being imported into the binder composition obtained after the pre-filling treatment step as a contaminant.

The magnetic filter may be a known device that can separate and remove magnetic contaminants through magnetic force of a magnet such as a permanent magnet or an electromagnet. For example, the magnetic filter may be a magnetic iron separator. The magnetic flux density of the magnetic filter is preferably at least 1,000 gauss and no greater than 15,000 gauss, and more preferably at least 6,000 gauss and no greater than 13,000 gauss.

### <Filling step>

In the filling step of this example, the binder composition obtained after removal of contaminants in the pre-filling treatment step is filled into a container made of a resin and shaped in a clean environment in which the number of particles of 0.5 µm in diameter is no greater than 100,000 particles per 1 ft³ (28.3 L), thereby obtaining a binder composition-containing container. By filling the binder composition into a container made of a resin and shaped in a clean environment in which the number of particles of 0.5 µm in diameter is no greater than 100,000 particles/ft³ as described above, importation of contaminants from the container can be inhibited and generation of coarse aggregate particles during storage of the binder composition due to a contaminant or the like originating from the container acting as a nucleus can also be inhibited. Accordingly, when an electrochemical device is produced using the binder composition, importation of contaminants into the electrochemical device can be sufficiently inhibited. If a container made of a resin and shaped in an environment in which the number of particles of 0.5 µm in diameter is greater than 100,000 particles/ft³ (non-clean environment) is used, it is not possible to sufficiently inhibit importation, into the binder composition, of contaminants originating from the container, such as contaminants imported into the container during shaping thereof. Consequently, importation of contaminants into an electrochemical device cannot be inhibited.

It is preferable from a viewpoint of sufficiently inhibiting importation of contaminants that the container is a container made of a resin and shaped in a clean environment in which the number of particles of 0.5 µm in diameter is no greater than 50,000 particles/ft³.

More preferably, the container is a container that is made of an additive-free resin or lined with an additive-free resin on at least an inner surface thereof, and that is shaped in the clean environment described above. When using a container that is shaped using an additive-containing resin in which an additive composed of a metal, a metal salt, or the like is compounded (for example, a resin in which aluminum stearate is compounded as a lubricant), the additive composed of a metal or metal salt may elute into the binder composition from the container. In this situation, the eluted additive itself is a contaminant and may also promote aggregation of a contaminant or polymer contained in the binder composition to form coarse particles. However, through use of a container made of an additive-free resin or a container lined with an additive-free resin on at least an inner surface thereof, elution of an additive composed of a metal or metal salt into the binder composition from the container can be prevented, and importation of contaminants and formation of coarse particles can be sufficiently inhibited. It is particularly preferable that the additive-free resin is a resin produced without compounding of any additives (also inclusive of additives other than those composed of a metal or metal salt).

The container described above may be, but is not specifically limited to, a commercially available container such as the products "POLYCON 13SL", "POLYCON 16SL", "POLYCON 20SL3", "POLYCON 20SL3PO", "POLYCON 20SL4", "POLYCON 20SL5", "POLYCON 20SL5W", and "POLYCON 20SL6" (all produced by Sekisui Seikei Co., Ltd.).

From a viewpoint of inhibiting importation of contaminants into the container and the binder composition during filling of the binder composition into the container and also from a viewpoint of preventing an increase in contaminant content of the binder composition filled into the container and preventing promotion of coarse particle generation due to imported contaminants, the filling of the binder composition into the container in the filling step of this example is preferably carried out in a clean environment in which the number of particles of 0.5 µm in diameter is no greater than 100,000 particles/ft³, is more preferably carried out in a clean environment in which the number of particles of 0.5 µm in diameter is no greater than 50,000 particles/ft³, and is particularly preferably carried out in a clean environment in which the number of particles of 0.5 µm in diameter is no greater than 40,000 particles/ft³.

More specifically, it is preferable that, in the filling step, a container that has been shaped in a clean environment by a known shaping method such as injection molding or blow molding is transported into a binder composition filling area without exposing the inside of the container to a non-clean environment (environment in which the number of particles of 0.5 µm in diameter is greater than 100,000 particles/ft³), such as by tightly sealing an opening of the container, and is then opened and filled with the binder composition in the binder composition filling area, which is a clean environment in which the number of particles of 0.5 µm in diameter is no greater than 100,000 particles/ft³. Moreover, when the container is transported into the binder composition filling area and is then filled with the binder composition, it is preferable that prior to the container being transported into the binder composition filling area, an outer surface of the container is cleaned with an air blower or the like to inhibit contaminants that are attached to the outer surface of the container from being imported into the container.

Furthermore, it is preferable that, in the filling step, an operation of transporting the container into the binder composition filling area and filling the binder composition into the container in the clean environment is a fully-automated operation. The possibility of contaminants being imported can be further reduced through this fully-automated transport and filling operation, which can be carried out without human contact.

In the filling step, the binder composition is preferably filled into the container such as to have a filling rate in the container of at least 75 volume%, more preferably at least 85 volume% and no greater than 92.5 volume%, and even more preferably at least 87.5 volume% and no greater than 92.5 volume%. An excessively high filling rate may lead to spilling of the binder composition from the container when the binder composition is subsequently used. However, an excessively low filling rate increases the volume of space present above the binder composition in the container, and thus facilitates formation of a film at the surface of the binder composition in the container due to solvent volatilization or the like during storage of the binder composition. Consequently, in a situation in which the filling rate is excessively low, the film formed in the container may become a contaminant and may act as a cause of coarse particle generation. An aqueous binder composition in which a particulate polymer is dispersed in water serving as a solvent is particularly susceptible to formation of a film.

### <Storage step>

In the storage step of this example, the binder composition that has been filled into the container in the filling step is then stored in the container until use thereof.

Although the container filled with the binder composition may be stored in any environment, an environment having a temperature of at least 5°C and no higher than 50°C is preferable, and an environment having a temperature of at least 5°C and no higher than 40°C is more preferable. Storage of the container in an environment having an excessively low temperature may lead to freezing of the solvent in the binder composition. However, storage of the container in an environment having an excessively high temperature may promote generation of coarse particles during storage. An aqueous binder composition in which a particulate polymer is dispersed in water serving as a solvent is particularly susceptible to promotion of coarse particle generation during storage of the container in a high-temperature environment.

### EXAMPLES

The following provides a more specific description of the present disclosure based on examples. However, the present disclosure is not limited to the following examples. In the following, "%", "ppm", and "parts" used to express quantities are by mass, unless otherwise specified.

The following methods were used in the examples and comparative examples to evaluate the number of particles in a binder composition filling area, magnetic contaminant content, coarse particle content, and occurrence of film formation. Preparation of binder compositions used in the examples and comparative examples is also described below.

### <Number of particles in binder composition filling area>

A particle counter (HandiLaz Mini produced by Particle Measuring Systems) was used to measure the number of particles of 0.5 µm in diameter in a 1 ft³ (cubic foot) space in accordance with FED 209D. This measurement was carried out at 5 positions in a binder composition filling area and an average value thereof was taken to be the number of particles in the binder composition filling area.

### <Magnetic contaminant content>

The amount of magnetic metal contained in a binder composition obtained after storage was measured by an ICP emission spectrometer and was taken to be the magnetic contaminant content.

### <Coarse particle content>

The binder composition obtained after storage was filtered using a filter having a pore size of 20 µm (NXT20-10U produced by Pall Corporation). The concentration of coarse particles in the binder composition was then calculated and was taken to be the coarse particle content.

### <Occurrence of film formation>

The surface of the binder composition obtained after storage was observed by eye to confirm whether film formation had occurred.

### <Preparation of aqueous binder composition>

A 5 MPa pressure container equipped with a stirrer was charged with 33.2 parts of 1,3-butadiene, 3.8 parts of itaconic acid, 62.0 parts of styrene, 1 part of 2-hydroxyethyl acrylate, 0.3 parts of t-dodecyl mercaptan as a molecular weight modifier, 0.3 parts of sodium dodecylbenzenesulfonate as an emulsifier, 150 parts of deionized water, and 1.0 parts of potassium persulfate as a polymerization initiator. The contents of the pressure container were sufficiently stirred and were then heated to 50°C to initiate polymerization. Cooling was performed to terminate the reaction at the point at which the polymerization conversion rate reached 96%. The resultant aqueous dispersion containing a diene-based copolymer was adjusted to pH 8 through addition of 5% sodium hydroxide aqueous solution. Thereafter, unreacted monomers were removed by distillation under heating and reduced pressure. Cooling was then performed to 30°C or lower. This yielded an aqueous binder composition of a particulate diene-based polymer (binder) dispersed in water serving as a solvent.

### <Preparation of organic solvent-based binder composition>

Polyvinylidene fluoride (HSV 900 produced by Arkema) was added to and mixed with N-methylpyrrolidone to yield an organic solvent-based binder composition of polyvinylidene fluoride (fluorine-containing polymer), serving as a binder, dissolved in N-methylpyrrolidone, serving as an organic solvent (polyvinylidene fluoride concentration: 8 mass%).

### (Example 1)

### <Pre-filling treatment step>

The prepared aqueous binder composition was microfiltered using a filter having a pore size of 10 µm (NXT10-10U produced by Pall Corporation) and was then further filtered using a magnetic filter (produced by TOK ENGINEERING Co., Ltd.) to separate and remove contaminants from the aqueous binder composition.

### <Filling step>

A container made of an additive-free resin and shaped in a clean environment in which the number of particles of 0.5 µm in diameter was no greater than 100,000 particles/ft³ (produced by Sekisui Seikei Co., Ltd.; capacity 20 L) was prepared.

The aqueous binder composition from which contaminants had been separated and removed was filled into the container made of the additive-free resin in a binder composition filling area in which the number of particles of 0.5 µm in diameter was 40,000 particles/ft³.

### <Storage step>

The container into which the binder composition had been filled was tightly sealed and stored for 90 days in an environment having a temperature of 25 °C. The magnetic contaminant content and coarse particle content of the binder composition obtained after storage were measured. Also, the surface of the binder composition obtained after storage was inspected by eye to determine whether a film had formed. The results are shown in Table 1.

### (Example 2)

A binder composition filled into a container was obtained by carrying out the pre-filling treatment step, the filling step, and the storage step in the same manner as in Example 1 with the exception that only microfiltration using the filter having a pore size of 10 µm was carried out in the pre-filling treatment step, and filtration using a magnetic filter was not carried out. The magnetic contaminant content and coarse particle content of the binder composition obtained after storage, and the occurrence of film formation were determined in the same manner as in Example 1. The results are shown in Table 1.

### (Example 3)

A binder composition filled into a container was obtained by carrying out the pre-filling treatment step, the filling step, and the storage step in the same manner as in Example 1 with the exception that a filter having a pore size of 40 µm (NXT40-10U produced by Pall Corporation) was used in the pre-filling treatment step instead of the filter having a pore size of 10 µm (NXT10-10U produced by Pall Corporation). The magnetic contaminant content and coarse particle content of the binder composition obtained after storage, and the occurrence of film formation were determined in the same manner as in Example 1. The results are shown in Table 1.

### (Example 4)

A binder composition filled into a container was obtained by carrying out the pre-filling treatment step, the filling step, and the storage step in the same manner as in Example 1 with the exception that the organic solvent-based binder composition was used instead of the aqueous binder composition. The magnetic contaminant content and coarse particle content of the binder composition obtained after storage, and the occurrence of film formation were determined in the same manner as in Example 1. The results are shown in Table 1.

### (Example 5)

A binder composition filled into a container was obtained by carrying out the pre-filling treatment step, the filling step, and the storage step in the same manner as in Example 1 with the exception that the temperature of the environment in which the container was stored in the storage step was changed to 55°C. The magnetic contaminant content and coarse particle content of the binder composition obtained after storage, and the occurrence of film formation were determined in the same manner as in Example 1. The results are shown in Table 1.

### (Example 6)

A binder composition filled into a container was obtained by carrying out the pre-filling treatment step, the filling step, and the storage step in the same manner as in Example 1 with the exception that the binder composition filling area in the filling step was changed to a binder composition filling area in which the number of particles of 0.5 µm in diameter was 50,000,000 particles/ft³. The magnetic contaminant content and coarse particle content of the binder composition obtained after storage, and the occurrence of film formation were determined in the same manner as in Example 1. The results are shown in Table 1.

### (Example 7)

A binder composition filled into a container was obtained by carrying out the pre-filling treatment step, the filling step, and the storage step in the same manner as in Example 1 with the exception that a container made of an additive-containing resin that contained an additive composed of a metal salt (produced by Sekisui Seikei Co., Ltd.; capacity 20 L) was used as the container into which the binder composition was filled. The magnetic contaminant content and coarse particle content of the binder composition obtained after storage, and the occurrence of film formation were determined in the same manner as in Example 1. The results are shown in Table 1.

### (Example 8)

A binder composition filled into a container was obtained by carrying out the pre-filling treatment step, the filling step, and the storage step in the same manner as in Example 4 with the exception that the binder composition filling area in the filling step was changed to a binder composition filling area in which the number of particles of 0.5 µm in diameter was 50,000,000 particles/ft³. The magnetic contaminant content and coarse particle content of the binder composition obtained after storage, and the occurrence of film formation were determined in the same manner as in Example 1. The results are shown in Table 1.

### (Examples 9 and 10)

In each example, a binder composition filled into a container was obtained by carrying out the pre-filling treatment step, the filling step, and the storage step in the same manner as in Example 1 with the exception that the filling amount and filling rate of the binder composition in the filling step were changed as shown in Table 1. The magnetic contaminant content and coarse particle content of the binder composition obtained after storage, and the occurrence of film formation were determined in the same manner as in Example 1. The results are shown in Table 1.

### (Comparative Example 1)

A binder composition filled into a container was obtained by carrying out the pre-filling treatment step, the filling step, and the storage step in the same manner as in Example 1 with the exception that a metal can (made of tin-plated steel; capacity 20 L) was used as the container into which the binder composition was filled. The magnetic contaminant content and coarse particle content of the binder composition obtained after storage, and the occurrence of film formation were determined in the same manner as in Example 1. The results are shown in Table 1.

### (Comparative Example 2)

A binder composition filled into a container was obtained by carrying out the pre-filling treatment step, the filling step, and the storage step in the same manner as in Example 4 with the exception that a metal can (made of tin-plated steel; capacity 20 L) was used as the container into which the binder composition was filled. The magnetic contaminant content and coarse particle content of the binder composition obtained after storage, and the occurrence of film formation were determined in the same manner as in Example 1. The results are shown in Table 1.

### (Comparative Example 3)

A binder composition filled into a container was obtained by carrying out the pre-filling treatment step, the filling step, and the storage step in the same manner as in Example 1 with the exception that a container made of an additive-free resin and shaped in a non-clean environment in which the number of particles of 0.5 µm in diameter was 2,000,000 particles/ft³ (produced by Sekisui Seikei Co., Ltd.; capacity 20 L) was used as the container into which the binder composition was filled. The magnetic contaminant content and coarse particle content of the binder composition obtained after storage, and the occurrence of film formation were determined in the same manner as in Example 1. The results are shown in Table 1.

**Table 1**

| | | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 |
|---|---|---|---|---|---|---|---|---|---|---|---|---|---|---|
| Binder composition | | Aqueous | Aqueous | Aqueous | Organic solvent-based | Aqueous | Aqueous | Aqueous | Organic solvent-based | Aqueous | Aqueous | Aqueous | Organic solvent-based | Aqueous |
| Container | Shaping environment | Clean environment | Clean environment | Clean environment | Clean environment | Clean environment | Clean environment | Clean environment | Clean environment | Clean environment | Clean environment | Non-clean environment | Non-clean environment | Non-clean environment |
| | Material | Additive-free resin | Additive-free resin | Additive-free resin | Additive-free resin | Additive-free resin | Additive-free resin | Additive-containing resin | Additive-free resin | Additive-free resin | Additive-free resin | Metal | Metal | Additive-free resin |
| Pre- filing treatment step | Microfiltration filter [µm] | 10 | 10 | 40 | 10 | 10 | 10 | 10 | 10 | 10 | 10 | 10 | 10 | 10 |
| | Magnetic filter | Yes | No | Yes | Yes | Yes | Yes | Yes | Yes | Yes | Yes | Yes | Yes | Yes |
| Filling step | Filling area (number of particles of 0.5 µm in diameter) [particles/ft³] | 40,000 | 40,000 | 40,000 | 40,000 | 40,000 | 50,000,000 | 40,000 | 50,000,000 | 40,000 | 40,000 | 40,000 | 40,000 | 40,000 |
| | Falling amount [L] | 18 | 18 | 18 | 18 | 18 | 18 | 18 | 18 | 14 | 16 | 18 | 18 | 18 |
| | Filling rate [volume%] | 90 | 90 | 90 | 90 | 90 | 90 | 90 | 90 | 70 | 80 | 90 | 90 | 90 |
| Storage step | Storage temperature [°C] | 25 | 25 | 25 | 25 | 55 | 25 | 25 | 25 | 25 | 25 | 25 | 25 | 25 |
| Magnetic contaminant content [mass ppm] | | Below lower limit of detection | 1 | Below lower limit of detection | Below lower limit of detection | Below lower limit of detection | 4 | 3 | 3 | Below lower limit of detection | Below lower limit of detection | 7 | 6 | 7 |
| Coarse particle content [mass%] | | 0 | 0.05 | 0.08 | 0 | 0.09 | 0.1 | 0.06 | 0.07 | 0.1 | 0.03 | 0.4 | 0.2 | 0.2 |
| Occurrence of film formation | | No | No | No | No | No | No | No | No | Yes | Yes | No | No | No |

It can be seen from Table 1 that in Examples 1 to 10 in which a binder composition was filled into a container made of a resin and shaped in a clean environment, a binder composition was obtained that had low magnetic contaminant content and low coarse particle content even after storage compared to Comparative Examples 1 and 2 in which a binder composition was filled into a metal can and Comparative Example 3 in which a binder composition was filled into a container made of a resin and shaped in a non-clean environment.

### INDUSTRIAL APPLICABILITY

According to the present disclosure, it is possible to provide a method for producing a binder composition for an electrochemical device that can sufficiently inhibit importation of contaminants into an electrochemical device when used in production of the electrochemical device.

## Claims

1. A method for producing a binder composition for an electrochemical device, comprising
filling, into a container, a binder composition for an electrochemical device that contains a binder, wherein
the container is a container made of a resin and shaped in a clean environment in which the number of particles of 0.5 µm in diameter is no greater than 100,000 particles per 1 ft³.

2. The method for producing a binder composition for an electrochemical device of claim 1, wherein
the container is a container made of an additive-free resin or a container lined with an additive-free resin on at least an inner surface thereof.

3. The method for producing a binder composition for an electrochemical device of claim 1 or 2, wherein
the filling of the binder composition for an electrochemical device into the container is carried out in a clean environment in which the number of particles of 0.5 µm in diameter is no greater than 100,000 particles per 1 ft³.

4. The method for producing a binder composition for an electrochemical device of any one of claims 1 to 3, further comprising
storing the container into which the binder composition for an electrochemical device has been filled in an environment having a temperature of at least 5°C and no higher than 50°C.

5. The method for producing a binder composition for an electrochemical device of any one of claims 1 to 4, further comprising
filtering the binder composition for an electrochemical device using a magnetic filter prior to the filling of the binder composition for an electrochemical device into the container.

6. The method for producing a binder composition for an electrochemical device of any one of claims 1 to 5, wherein
the binder composition for an electrochemical device has a filling rate in the container of at least 75 volume%.
